## Europäisches Patentamt
## European Patent Office
## Office européen des brevets

(11) Publication number: **0 034 124**
**B1**

## EUROPEAN PATENT SPECIFICATION

(45) Date of publication of patent specification: **04.09.85**

(51) Int. Cl.⁴: **H 01 S 3/097, H 01 S 3/095**

(21) Application number: **81830007.1**

(22) Date of filing: **20.01.81**

(54) **High voltage pump circuit for gas laser.**

(30) Priority: **11.02.80 IT 4798880**

(43) Date of publication of application:
**19.08.81 Bulletin 81/33**

(45) Publication of the grant of the patent:
**04.09.85 Bulletin 85/36**

(84) Designated Contracting States:
**DE FR GB NL SE**

(56) References cited:
**EP-A-0 018 535**

**REV. OF SCI. INSTRUM. vol. 48, no. 8, August
1977 New York, USA J.L. PACK et al. "High
average power pulser design for copper halide
laser systems" pages 1047-1049
SOV. J. OF QUANTUM ELECTRONICS, vol. 8,
no. 2, February 1978, New York, USA P.A.
BOKAN et al. "Investigation of a transversely
excited pulsed copper vapor laser" pages
219-221**

(73) Proprietor: **SELENIA INDUSTRIE
ELETTRONICHE ASSOCIATE S.p.A.
Via Tiburtina, KM 12.400
I-00131 Roma (IT)**

(72) Inventor: **Marchetti, Renato
Via Laura Mantegassa, 82
I-00152 Roma (IT)**
Inventor: **Penco, Eugenio
Via Bevignani, 12
I-00186 Roma (IT)**
Inventor: **Tranquilli, Angelo
Vicolo di Via Gregoriana, 1
Frascati Roma (IT)**

(74) Representative: **Gustorf, Gerhard, Dipl.-Ing.
Mühlenstrasse 1
D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a pump circuit for pulsed gas lasers in accordance with the generic clause of claim 1.

A pump circuit for gas lasers comprising features of the generic clause of claim 1 is already known from "Review of Scientific Instruments" (Vol. 48, No. 8, 1977, Pages 1047—1049).

At the circuit shown in Fig. 1 of this reference, the respective capacitors of the first and second circuit are connected to ground. The respective other free ends of the first and second circuits are connected to two thyratrons being alternatively operated. Thus, this prior art pump circuit generates pulses of alternating polarity which is desirable in view of the reduced cataphoretic effects and the extension of the operating live time of the gas laser. However, this prior art circuit is relatively complicated and costly due to the requirement of two thyratrons.

The present invention is based on the technical task of how to further simplify a pump circuit in accordance with the generic clause of claim 1 whilst maintaining its current reversal-and voltage multiplying-properties.

This technical task is solved by a pump circuit is accordance with the generic clause of claim 1 having the features of the characterizing portion of claim 1.

Hereinafter, a preferred embodiment in accordance with the present invention as well as graphs showing the principal mode of operation thereof will be described with reference to the attached drawings.

Fig. 1 shows an embodiment of a pump circuit in accordance with the present invention,

Fig. 2 shows an equivalent circuit of the embodiment shown in Fig. 1,

Fig. 3a shows the time-dependency of the current flowing through the electrodes of the laser head, and

Fig. 3b shows the behaviour of the voltage across the electrodes

VA=electrode A voltage
VB=electrode B voltage
VC=resultant voltage across the electrodes.

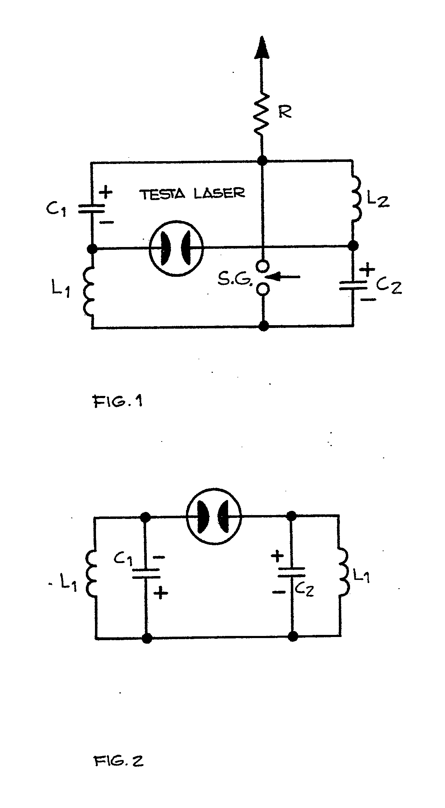

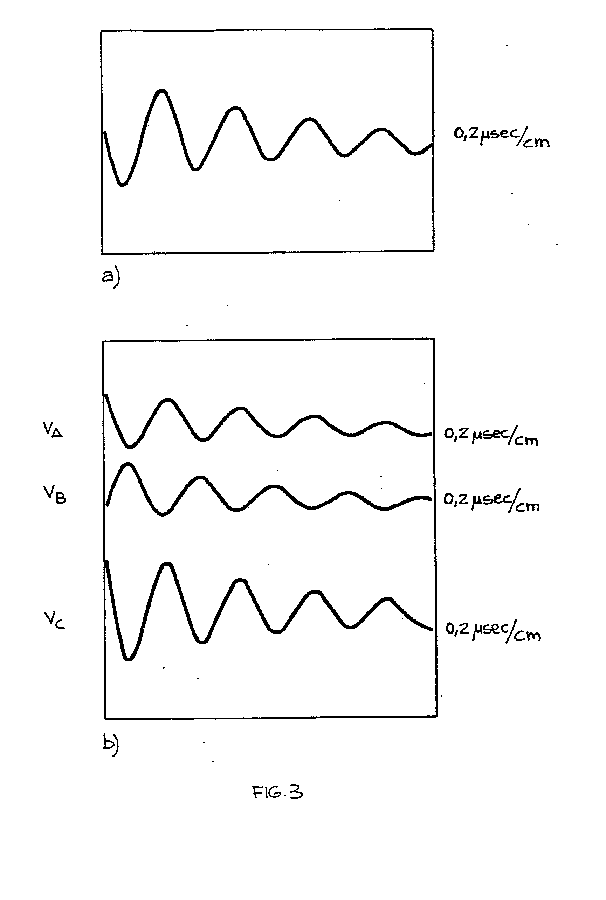

The subject of the present invention is a pump circuit (Fig. 1) in which two LC circuits are placed in such a way that when the switch is clsoed the voltages oscillate with opposite phases so that the sum of the oscillating voltages appears across the electrodes, as may be seen from the equivalent circuit shown in Fig. 2. Thus the circuit meets the requirement of simplicity of construction and high reliability since it uses only one system of charging and uses only one switch. This switch can be, as in our realisation, a grounded-grid type thyraton and then it does not present the problem of isolating the filaments as was the case in the preceding solution (1). The circuit with the thyratron also has the advantage of being able to operate at high repetition rates, which is impossible with spark-gap switches, further it is characterised by low EMI emission. A further and fundamental characteristic of this circuit is the increase in efficiency of the pumped laser head using this method. The reason for this increase is to be found in the particular form of pumping voltage. In fact because of the particular circuit adopted the pump voltage is of the type shown in Fig. 3b, while with the circuits analysed in sections 1, 2 and 3 the waveform is damped.

Some simple considerations can show the difference in quality between the proposed method and those used previously. When we apply a unidirectional electric field between two electrodes, an electron within this field will travel towards an electrode to neutralise itself on it, exciting a number of molecules proportional to the path travelled. If on the other hand an oscillating field is applied (Fig. 3) with a suitable frequency the path travelled by the electron in the gas may be increased and therefore the number of molecules excited. This is shown in some detail in reference (4) where a comparison is made between an r.f. discharge and a continuous one in a gas. With the adaption of this circuit it has been possible to construct a fairly compact $CO_2$ TEA Laser with high repetition rate (100 Hz) and with a high average power output (~50W) and with a sufficient degree of reliability.

This invention can be used in all pulse excited gas lasers and also in chemical lasers with electric pulse initiation (5).

## Claims

1. Pump circuit for pulsed gas lasers comprising:

a first circuit $(L_1, C_1)$ consisting of a first inductor $(L_1)$ connected in serial connection to a first capacitor $(C_1)$,

a second circuit $(L_2, C_2)$ consisting of a second inductor $(L_2)$ connected in serial connection to a second capacitor $(C_2)$, a switching means (S.G.)

the common node of the first inductor $(L_1)$ and the first capacitor $(C_1)$ being connected to a first electrode of the gas laser,

the common node of the second inductor $(L_2)$ and the second capacitor $(C_2)$ being connected to a second electrode of the gas laser, characterized in

that the first circuit $(L_1, C_1)$ is connected in parallel connection to the second circuit $(L_2, C_2)$ such that the first inductor $(L_1)$ of the first circuit $(L_1, C_1)$ is connected to the second capacitor $(C_2)$ of the second circuit $(L_2, C_2)$ and that the first capacitor $(C_1)$ of the first circuit $(L_1, C_1)$ is connected to the second inductor of the second circuit $(L_2, C_2)$ and

that the switching means (S.G.) is connected in parallel connection to said first and second circuits $(L_1, C_1; L_2, C_2)$.

2. Pump circuit as claimed in claim 1, characterized in that the switching means (S.G.) is a thyraton.

## Patentansprüche

1. Pumpkreis für gepulste Gaslaser, umfassend

— eine erste Schaltung ($L_1$, $C_1$) mit einer ersten Induktivität ($L_1$) und einem in Reihe damit verbundenen, ersten Kondensator ($C_1$),
— eine zweite Schaltung ($L_2$, $C_2$) mit einer zweiten Induktivität ($L_2$) und einem in Reihe damit verbundenen, zweiten Kondensator ($C_2$) sowie
— Schaltmittel (S.G.),

wobei der Verbindungspunkt zwischen der ersten Induktivität ($L_1$) und dem ersten Kondensator ($C_1$) mit einer ersten Elektrode des Gaslasers und der Verbindungspunkt zwischen der zweiten Induktivität ($L_2$) und dem zweiten Kondensator ($C_2$) mit einer zweiten Elektrode des Gaslasers verbunden sind, dadurch gekennzeichnet, daß die erste Schaltung ($L_1$, $C_1$) in Parallelschaltung so mit der zweiten Schaltung ($L_2$, $C_2$) verbunden ist, daß die erste Induktivität ($L_1$) der ersten Schaltung ($L_1$, $C_1$) mit dem zweiten Kondensator ($C_2$) der zweiten Schaltung ($L_2$, $C_2$) und der erste Kondensator ($C_1$) der ersten Schaltung ($L_1$, $C_1$) mit der zweiten Induktivität ($L_2$) der zweiten Schaltung ($L_2$, $C_2$) verbunden ist, und daß die Schaltmittel (S.G.) parallel zur ersten Schaltung ($L_1$, $C_1$) und zur zweiten Schaltung ($L_2$, $C_2$) geschaltet sind.

2. Pumpkreis nach Anspruch 1, dadurch gekennzeichnet, daß die Schaltmittel (S.G.) ein Thyraton sind.

## Revendications

1. Circuit de pompage pour laser à gaz impulsionnel comprenant:

— un premier circuit ($L_1$, $C_1$) consistant en une première inductance ($L_1$) connectée en série à un premier condensateur ($C_1$),
— un second circuit ($L_2$, $C_2$) consistant en une seconde inductance ($L_2$) connectée en série à un second condensateur ($C_2$),
— des moyens de commutation (S.G.),

le noeud commun de la première inductance ($L_1$) et du premier condensateur ($C_1$) étant connecté à une première électrode du laser à gaz, le noeud commun de la seconde inductance ($L_2$) et du second condensateur ($C_2$) étant connecté à une seconde électrode du laser à gaz, caractérisé par le fait que le premier circuit ($L_1$, $C_1$) est connecté en parallèle au second circuit ($L_2$, $C_2$) de telle sorte que la première inductance ($L_1$) du premier circuit ($L_1$, $C_1$) est connectée au second condensateur ($C_2$) du second circuit ($L_2$, $C_2$) et qu le premier condensateur ($C_1$) du premier circuit ($L_1$, $C_1$) est connecté à la seconde inductance du second circuit ($L_2$, $C_2$), et que les moyens de commutation (S.G.) sont connectés en parallèle auxdits premier et second circuits ($L_1$, $C_1$; $L_2$, $C_2$).

2. Circuit de pompage selon la revendication 1, caractérisé par le fait que les moyens de commutation (S.G.) sont constitués par un thyraton.

FIG.1

FIG. 2

a)

0,2 μsec/cm

$V_A$

0,2 μsec/cm

$V_B$

0,2 μsec/cm

$V_C$

0,2 μsec/cm

b)

FIG. 3